# EUROPEAN PATENT APPLICATION

(11) **EP 2 816 707 A1**
(43) Date of publication of application: **24.12.2014**
(21) Application number: 13749694.9
(22) Date of filing: 14.02.2013
(51) Int. Cl.: H02K 1/14, H02K 1/16, H02K 1/18

(54) **STATOR CORE FOR MOTOR**

(30) Priority: 14.02.2012 JP 2012029971
(71) Applicant: NHK Spring Co., Ltd., Kanagawa 236-0004 (JP)
(72) Inventor: KAMEDA, Yohei, Yokohama-shi Kanagawa 236-0004 (JP); IWATA, Kazuo, Yokohama-shi Kanagawa 236-0004 (JP); OKURA, Ken, Yokohama-shi Kanagawa 236-0004 (JP); ONO, Yoshiki, Yokohama-shi Kanagawa 236-0004 (JP)
(74) Representative: Oppermann, Frank
(86) International application number: PCT/JP2013/000812
(87) International publication number: WO 2013/121786

(57) **Abstract**

Provided is a stator core for a motor capable of facilitating an assembly work and parts management without increasing the number of components while suppressing leakage of magnetic flux passing through a flange to a coil. A stator core 13 has an annular yoke portion 15 and tooth portions 17 inwardly protruding from an inner periphery of the yoke portion 15 in a radial direction, wherein at a front end of the tooth portion 17 inwardly protruding in the radial direction, a flange portion 21 is provided so as to face a coil wound around the tooth portion 17 and wherein to the flange portion 21, a compressive residual stress portion M is provided.

## Description

### FIELD OF THE INVENTION

The present invention relates to a stator core for a motor.

### BACKGROUND OF THE INVENTION

In recent years, in accordance with advances in new technology for a wide variety of electrical equipment, electric vehicles, hybrid vehicles, robots and the like, performance required for motors or electric generators used for them becomes highly developed. For example, in industrial motors, electric vehicles, hybrid vehicles, or the like, there is a need for high torque, high output, space-saving and the like.

Patent document 1 has proposed an interior permanent magnet synchronous motor having stator coils placed at slot portions with concentrated winding around tooth portions of a stator core in order to meet said need for high torque, high output, and space-saving. This technique suppresses overcurrent generated in the coils due to leakage magnetic flux by a configuration in which a plurality of coil conductor wires are connected in parallel, the conductor wires having at least coil conductor wires located on a coil surface side and reduced in cross-section. This is because a space between teeth becomes large due to the concentrated winding and this results in the increase of the leakage magnetic flux that passes through the slot portion and that contributes no magnetic action in association with the rotor. Further, this stator core is formed by laminating a plurality of magnetic steel plates and has a flange portion protruding along a rotor rotational direction (circumferential direction) from a front end of the tooth portion of each steel plate, thereby to suppress a problem of causing magnetic flux from the rotor to directly reach the coil and generating overcurrent.

Even so, since there is leakage magnetic flux passing through the coil from a coil-side-margin of the flange portion to a tooth margin, this method is not enough to improve the motor efficiency. Then, in the stator with the flanges, the coil is preferably wound at the slot portion as far away from a flange portion root as possible in order to avoid leakage magnetic flux passing through the coil from a marginal portion of the flange portion as much as possible. For this, there is a need to provide a spacer between the flange portion and the coil or the like. Since the spacer or the like causes the increase of the number of components or man hour or requires a space that reduces the number of coil turns, it becomes an obstacle to high efficiency as an excitation magnetic pole of the stator and consequently to the downsizing of the motor.

On the other hand, in a stator core disclosed in Patent document 2, a flange is configured by a plurality of magnetic plates laminated in a direction oriented from a front end of a tooth portion to a yoke portion. With this, a surface of each magnetic plate is substantially orthogonal to a direction along which magnetic flux enters from a rotor, so that the magnetic flux from the rotor is led along the surface of each magnetic plate to the tooth portion to reduce the amount of the magnetic flux reaching the coil in a slot region without a space with respect to the flange. Additionally, since the amount of magnetic flux passing through the tooth portion increases, the amount of the magnetic flux contributing torque also increases to allow the magnetic flux to be efficiently used. It realizes a stator with high performance capable of high torque and high output of a motor.

However, the plurality of the laminated magnetic plates are discrete components separated from the stator core, and the discrete magnetic plates need to be formed for a plurality of tooth portions, respectively. This significantly increases the number of components, thereby to extremely complicate the assembly work and parts management.

### PRIOR ART DOCUMENT

### PATENT DOCUMENT

PATENT DOCUMENT 1: JP2004-208464A
PATENT DOCUMENT 2: JP2009-38904A

### SUMMARY OF THE INVENTION

### PROBLEMS TO BE SOLVED BY THE INVENTION

A problem to be solved is that the conventional method, which suppresses the leakage of the magnetic flux passing through the flange to the coil, needs the space between the flange portion and the coil that becomes an obstacle to the downsizing, significantly increases the number of components, and extremely complicates the assembly work and parts management.

### MEANS FOR SOLVING THE PROBLEM

The present invention provides a stator core for a motor in order to extremely facilitate an assembly work and parts management without increasing the number of components while suppressing leakage of magnetic flux passing through a flange portion to a coil. The stator core includes an annular yoke portion, and tooth portions inwardly protruding from an inner periphery of the yoke portion in a radial direction. At a front end of the tooth portion inwardly protruding in the radial direction, a flange portion is provided along a rotor rotational direction (circumferential direction) so as to face a coil wound around the tooth portion. To the flange portion on each one of plates laminated to form the tooth portion, a compressive residual stress portion or a non-magnetic portion is provided.

### EFFECT OF THE INVENTION

The stator core for the motor according to the present invention, due to the aforementioned configuration, suppresses leakage of magnetic flux passing through the flange portion to the coil with the compressive residual stress portion or non-magnetic portion of the flange, thereby to realize a stator core with high performance capable of high torque and high output. At the same time, it is only necessary to form the compressive residual stress portion or non-magnetic portion on the flange, so that there is no need to secure a space between the flange portion and the coil and it extremely facilitates an assembly work and parts management without increasing the number of components.

### BRIEF DESCRIPTION OF THE DRAWINGS

[FIG. 1] It is a configuration diagram schematically illustrating an electric motor. (Embodiment 1)
[FIG. 2] It is a partial perspective view illustrating a lamination of a stator core. (Embodiment 1)
[FIG. 3] It is a partial front view illustrating the stator core. (Embodiment 1)
[FIG. 4] It is a sectional view taken along a line IV-IV of FIG. 3. (Embodiment 1)
[FIG. 5] It is a sectional view at the time of compressing to a flange portion. (Embodiment 1)
[FIG. 6] It is a partial front view illustrating a stator core together with a motor case. (Embodiment 2)
[FIG. 7] It is a partial front view illustrating a stator core together with a motor case. (Embodiment 3)

### EMBODIMENT FOR CARRYING OUT THE INVENTION

The object that is to facilitate an assembly work and parts management without increasing the number of components while suppressing leakage of magnetic flux passing through a flange portion to a coil is accomplished by a stator core 13. The stator core 13 has an annular yoke portion 15 and tooth portions 17 inwardly protruding from an inner periphery of the yoke portion 15 in a radial direction. At a front end of the tooth portion 17 inwardly protruding in the radial direction, a flange portion 21 is provided along a rotor rotational direction (circumferential direction) to face a coil wound around the tooth portion 17. To the flange portion 21 on each one of plates laminated to form the tooth portion, a compressive residual stress portion S or a non-magnetic portion M is provided.

### EMBODIMENT 1

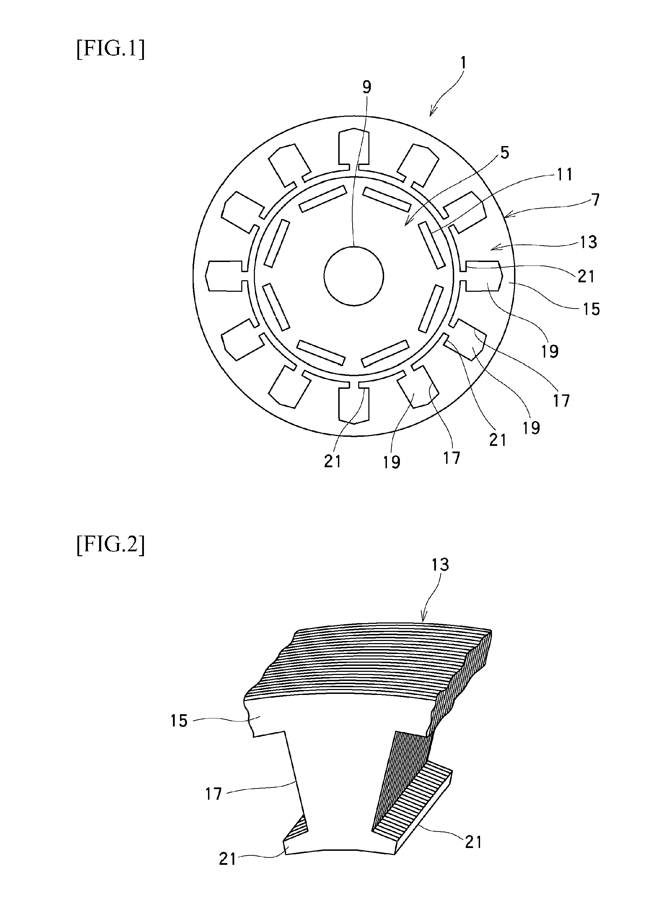

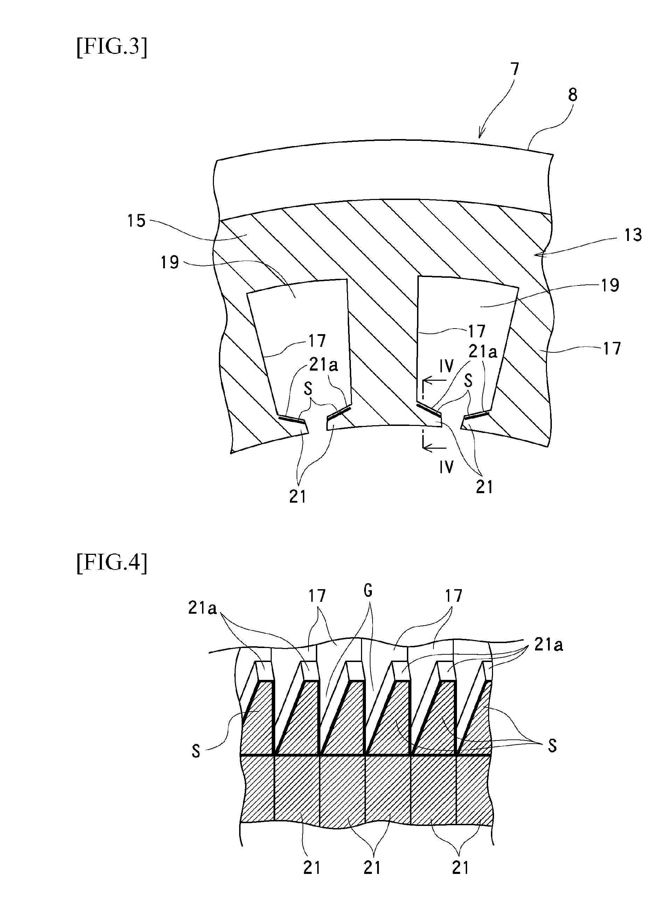

FIG. 1 is a configuration diagram schematically illustrating an electric motor, FIG. 2 is a partial perspective view illustrating a lamination of a stator core, FIG. 3 is a partial front view illustrating the stator core, and FIG. 4 is a sectional view taken along a line IV-IV of FIG. 3. In the following explanation, a circumferential direction and a radial direction mean a circumferential direction and a radial direction of a stator core, respectively. In addition, the circumferential direction is also a rotor rotational direction.

As illustrated in FIGs. 1 to 4, an electric motor 1 has a rotor 5 and a stator 7. The rotor 5 is attached to a rotary shaft 9. The stator 7 is arranged so that an inner peripheral surface of the stator faces an outer peripheral surface of the rotor 5, and is configured as a three-phase alternate-current traction.

The rotor 5 has a configuration in which a plurality of members annularly formed by punching to electromagnetic steel plates are laminated. To the rotary shaft 9, the rotor is fixed by shrinkage fitting, spline fitting, or the like. On an outer peripheral side of the rotor 5, permanent magnets 11 are attached. The permanent magnets 11 are arranged so that magnetic flux is oriented in the radial direction and the orientations of the magnetic poles of the permanent magnets are alternately reversed.

The stator 7 includes a stator core 13 and coils (not illustrated), and is attached to a motor case 8 by shrinkage fitting or the like with an interference.

The stator core 13 has a laminated configuration in which a plurality of plates annularly formed by, for example, punching to electromagnetic steel plates are laminated. The stator core has an annular yoke portion 15 and tooth portions 17 inwardly protruding from an inner periphery of the yoke portion 15 in the radial direction. Through slots 19 between adjacent tooth portions 17, the coils are wound around the tooth portions 17.

At a front end of the tooth portion 17, a flange portion 21 is provided. This flange portion 21 faces in the radial direction the coil wound around the tooth portion 17.

According to the embodiment, the flange portion 21 has a compressive residual stress portions S to reduce leakage magnetic flux passing through the coil to a margin of the tooth 17. The compressive residual stress portions S are formed into a wedge shape in cross section by compressing to coil-side-margin 21 a sides of one side faces in a lamination direction of the flange portion 21 of each one of plates laminated to form the tooth portion 17 and are provided along inclinations of the coil-side-margins 21 a. In this way, according to this embodiment, the compressive residual stress portion S is formed along only the coil-side-margin 21 a side of the flange portion 21 and an opposite-coil-side-margin of the flange 21 is not processed by compressing to have the original thickness.

Between the coil-side-margin 21 a sides of the flange portions 21 in the lamination direction, a gap G is formed corresponding to the compressive residual stress portion S at each interspace. The gap G is formed so as to become the maximum on a coil side contrary to the compressive residual stress portion S.

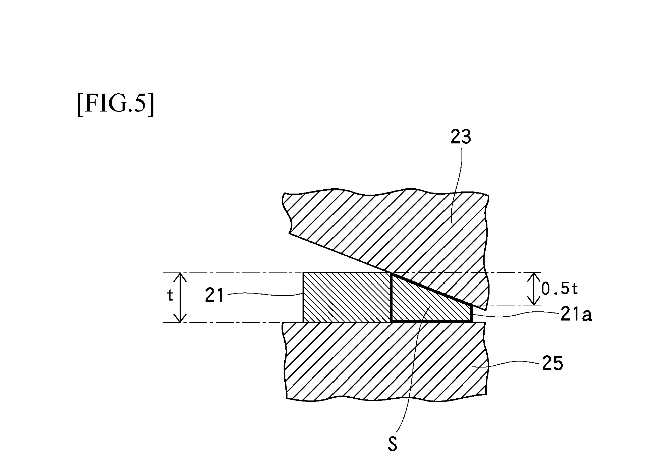

FIG. 5 is a sectional view illustrating the compressing to the flange portion.

As illustrated in FIG. 5, the flange portion 21 is processed by the compressing to the flange portion 21 by means of a punch 23 and a die 25 to form the compressive residual stress portions S on the flange portion 21. The compression ratio is set so as to be 50% at the coil-side-margin 21 a in a region that is half as large again as the thickness t from the coil-side-margin 21 a and is processed to incline from a tooth side upper face. The compressive residual stress portion S is formed in a range of 0.5t (on the coil-side-margin 21 a side) from an inclination starting point of the flange upper face of FIG. 5. In addition, the compression ratio is not limited to 50% and may be arbitrarily set in a range more or less than 50% according to the motor specification or the like in a relationship to magnetic permeability, strength, and heat dissipation of the flange portion 21.

The compressing by means of the punch 23 and the die 25 is carried out per plate of the stator core 13 when punching the electromagnetic steel plates. This processing may be incorporated into a progressive die and be carried out before an end outline is shaped.

Where, a relationship between the increase in strength and the decrease in magnetic permeability based on work hardening at the time of compressive deformation is known such that the magnetic permeability decreases and the strength increases as a degree of the deformation increases. According to this embodiment, the flange portion 21 gradually thins into the wedge shape in cross-section toward the coil-side-margin 21 a side to reduce the magnetic permeability on the coil-side-margin 21 a side due to the compressing whereas the strength increases. On the coil-side-margin 21 a side, since the flange portion 21 has a free end because of its structure, the increase of the strength due to the compressing provides an advantageous configuration when suffering torque fluctuations or the like. Additionally, the magnetic permeability reduces as a portion in the coil-side-margin 21 a side is closer to the coil.

Namely, the magnetic permeability surely reduces with respect to the coil side space in a direction along which the magnetic flux enters from the rotor, and the strength increases on the coil-side-margin 21 a side that is thinned by the compressing. Further, the heat dissipation of the stator core improves according to the thinning of the coil-side-margin 21 a and the gap G, thereby to suppress the rise in temperature of the entire stator core.

Therefore, it suppresses the problem of causing the magnetic flux from the rotor to directly reach the coil and generating overcurrent. It synergistically reduces copper loss and iron loss due to the suppression of the rise in temperature, and also adapts to high-speed rotation and torque fluctuations.

Additionally, the compressive residual stress portion S extends along the coil-side-margin 21 a from the front end to a base portion on the tooth portion 17 side of the flange portion 21. Therefore, the compressive residual stress portion entirely intersects the direction along which the magnetic flux enters from the rotor, and the opposite-coil-side-margin side that is on the inner side in the radial direction relative to the compressive residual stress portion S keeps the original thickness of the flange portion 21. Accordingly, the opposite-coil-side-margin that is on the inner side in the radial direction relative to the compressive residual stress portion S leads in the rotor rotational direction (circumferential direction) along the flange portion 21 the magnetic flux entering from the rotor, so that the magnetic flux from the rotor is surely prevented from directly reaching the coil.

Additionally, the compressive residual stress portion S of the coil-side-margin 21 a inclines outwardly in the radial direction from the front end to the base portion toward the tooth portion 17 in the circumferential direction, to effortlessly lead to the tooth portion 17 the magnetic flux entering from the rotor.

Further, since the magnetic permeability of air in the gap G generated by the compressing of the flange portion 21 is very small, the magnetic resistance increases due to the generation of the gap G. Additionally, the cross section of the gap G gradually increasing toward the coil-side-margin 21 a is formed into the wedge, to increase the magnetic resistance between the coil-side-margins 21 a. In also this respect, the magnetic flux from the rotor is surely prevented from directly reaching the coil.

In this way, the leakage of the magnetic flux passing through the flange portion 21 to the coil is suppressed by the compressive residual stress portion S of the flange portion 21 and the rise in the coil temperature is suppressed by the reduction of the overcurrent loss of the coil. Further, the heat dissipation improves according to the thinning of the coil-side-margin 21 a and the gap G, thereby to suppress the rise in temperature of the entire stator core. By reducing the copper loss that is caused by the increase of the coil resistance due to the rise of the coil temperature and by reducing the overcurrent loss of the coil, the stator core 13 realizes high performance capable of high torque and high output.

Further, it is only necessary to form the compressive residual stress portion S on the flange 21, so that it extremely facilitates an assembly work and parts management without increasing the number of components.

### EMBODIMENT 2

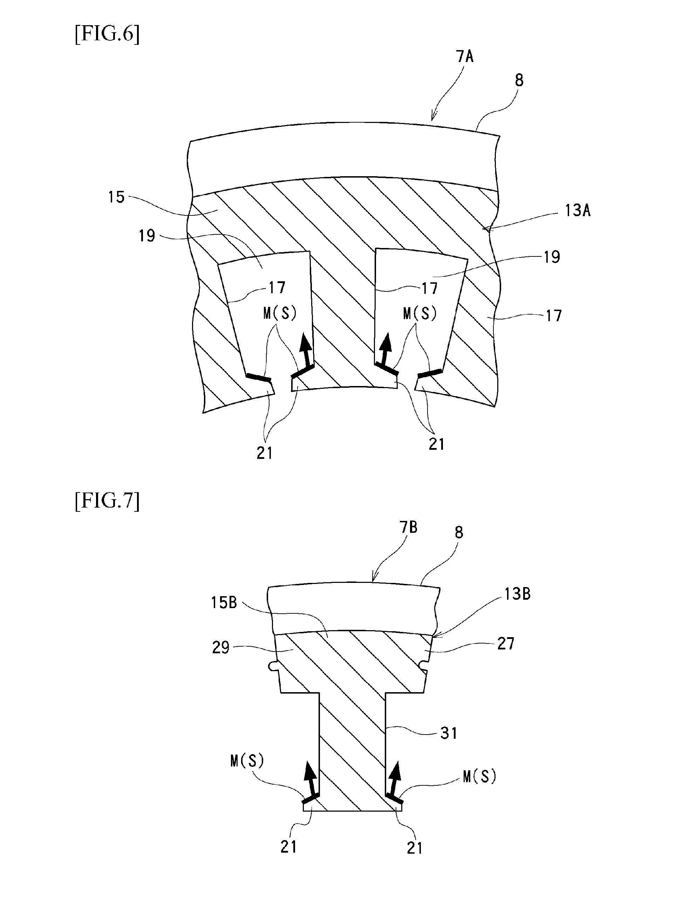

FIG. 6 is a partial front view illustrating a stator core according to Embodiment 2. A basic structure is the same as that of Embodiment 1 and the same components are represented with the same reference numerals and corresponding components are represented with the same reference numerals with "A" to avoid repetition in a description.

A stator core 13A of a stator 7A according to this embodiment is provided with non-magnetic portions M formed to a flange 21 on coil-side-margins 21 a. The non-magnetic portion M is a so-called remaining austenitic phase remaining at room temperature by rapid quenching to a phase stable at high temperature in carbon steel. The non-magnetic portion is formed through gas carburizing and quenching after applying anti-carburizing agent to a surface other than an objective area. Alternatively, the non-magnetic portion is formed through quenching in a non-oxidizing atmosphere after applying solid carburizing agent to the objective area. Further, the non-magnetic portion may be formed through high-frequency dielectric heating or spot-laser heating with a dielectric heating coil locally arranged to the objective area after applying solid carburizing agent to the objective area or in carburizing gas. In these carburizing and quenching, it may transform a composition into a martensite phase according to carburizing density so that the area is formed as a compressive residual stress portion S that receives compression force from the surrounding due to the phase transformation expansion. In other words, on the flange portion, the non-magnetic (remaining austenitic phase) portion M and the compressive residual stress portion S may be mixed.

Such a formation of the non-magnetic portions M or the non-magnetic portions M and compressive residual stress portions S provides the same effects as Embodiment 1.

The carburizing and quenching may be carried out either per plate of the stator core 13A or to a laminated configuration.

### EMBODIMENT 3

FIG. 7 is a front view illustrating a stator core divided body. A basic structure is the same as that of Embodiment 1 and the same components are represented with the same reference numerals and corresponding components are represented with the same reference numerals with "B" to avoid repetition in a description.

In a stator core 13B of a stator 7B according to this embodiment, stator core divided bodies 27 are connected together and annularly arranged.

Each stator core divided body 27 includes a yoke component portion 29 and a tooth portion 31 and has a laminated configuration in which a plurality of plates formed by punching electromagnetic steel plates are laminated. The yoke component portion 29 is configured by dividing an annular yoke portion 15B in a circumferential direction at predetermined intervals. A plurality of the stator core divided bodies 27 are annularly joined together in the circumferential direction and are attached to a motor case 8 by shrinkage fitting or the like with an interference.

A tooth portion 31 of the stator core divided body 27 has non-magnetic portions M or compressive residual stress portions (S) formed on a flange 21 by carburizing and quenching like Embodiment 2.

Such a formation of the non-magnetic portions M or the compressive residual stress portions (S) provides the same effects as Embodiment 1.

### EMBODIMENT 4

This embodiment carries out a process of Embodiment 2 or a process of Embodiment 3 like Embodiment 2 and thereafter carries out compressing of Embodiment 1. As a result, with hardening due to carburizing and quenching, compressive residual stress portions S can be formed to have a larger value and a wider area spanning to a non-hardened portion or a non-compressing portion than Embodiments 1 to 3. With this, leakage of magnetic flux passing through a flange 21 to a coil is further suppressed

### [OTHERS]

In each of the aforementioned embodiments, the non-magnetic portion M is formed or the non-magnetic portion M and compressive residual stress portion S are formed on all the edge portion along the coil-side-margin 21 a of the flange portion 21. However, the non-magnetic portion or the non-magnetic portion and a compressive residual stress portion may be partly formed in a longitudinal direction of the coil-side-margin 21 a or may be formed on the entire flange portion 21.

The coil-side-margin 21 a of the flange portion 21 may be formed to have a shape that is not outwardly inclined in the radial direction toward the tooth portion 17.

### DESCRIPTION OF NOTATIONS

13, 13A, 13B Stator core
15, 15B Yoke portion
17, 31 Tooth portion
21 Flange portion
27 Stator core divided body
29 Yoke component portion
S Compressive residual stress portion
M Non-magnetic portion

## Claims

1. A stator core for a motor comprising:
an annular yoke portion (15); and
tooth portions (17, 31) inwardly protruding from an inner periphery of the yoke portion (15) in a radial direction,
wherein a flange portion (21) is provided along a circumferential direction at a front end of the tooth portion (17, 31) inwardly protruding in the radial direction to face a coil wound around the tooth portion, and
wherein the flange portion (21) on each one of plates laminated to form the tooth portion has a compressive residual stress portion (S) or a non-magnetic portion (M).

2. The stator core according to claim 1, wherein the compressive residual stress portion (S) is formed by compressing to the flange portion (21).

3. The stator core according to claim 1 or 2, wherein the compressive residual stress portion (S) or the non-magnetic portion (M) is formed through carburizing and quenching to the flange portion (21).

4. The stator core according to any one of claims 1 to 3, wherein the compressive residual stress portion (S) or the non-magnetic portion (M) is formed by compressing after carburizing and quenching to the flange portion (21).

5. The stator core according to any one of claims 1 to 4, wherein a plurality of stator core divided bodies (27) each having a yoke component portion (29) that is provided with the tooth portion (17, 31) are joined together and annularly arranged.

6. The stator core according to any one of claims 1 to 5, wherein the compressive residual stress portion (S) or the non-magnetic portion (M) is formed along only a coil-side-margin side of the flange portion (21).

7. The stator core according to claim 6, wherein the coil-side-margin (21 a) inclines outwardly in the radial direction from a front end to a base portion toward the tooth portion (17, 31) in the circumferential direction.
